# EUROPEAN PATENT APPLICATION

(11) **EP 1 771 031 A2**
(43) Date of publication of application: **04.04.2007**
(21) Application number: 06121426.8
(22) Date of filing: 28.09.2006
(51) Int. Cl.: H04Q 7/38, H04Q 7/24

(54) **Tracking roaming cellular telephony calls for anti-fraud**

(30) Priority: 28.09.2005 US 721076 P
(71) Applicant: Starhome GmbH, 8024 Zürich (CH)
(72) Inventor: Della-Torre, Reuven, 52376, Ramat-Gan (IL)
(74) Representative: Weydert, Robert

(57) **Abstract**

An anti-fraud system for controlling fraudulent activity at a cellular telephone roaming networks. The system comprises a fraud management unit that is configured to monitor telephony activity on the network, detect fraudulent patterns within the activity and take action to manage detected fraudulent activity. The system further comprises a roaming signaling interrogation unit that is associated with the fraud management unit. The roaming signaling interrogation unit is configured to monitor signaling indicative of roaming connections set up by subscribers of the cellular network from other networks and to forward information of the roaming to the fraud management unit. Such forwarding allows the fraud management unit to manage detected fraudulent activity amongst the roaming connections.

## Description

### FIELD AND BACKGROUND OF THE INVENTION

The present invention relates to a system, an apparatus, and a method for preventing and monitoring roaming fraud and, more particularly but not exclusively, to a system and method for preventing and monitoring roaming fraud using service nodes such as intelligent gateways.

Mobile communication has been readily available for several years, and is a major business today. It provides a valuable service to its users who are willing to pay a premium over a fixed line phone, in order to be able to walk and talk freely. Because of its usefulness and the money involved in the business, it is subject to fraud and criminal interest. Some of the features of mobile communication make it an alluring target for criminals. It is a relatively new invention, so not all people are quite familiar with its possibilities, good or bad. Its novelty also creates intense competition among mobile phone service providers who are trying to attract new customers. Both of these provide an opportunity for the criminally inclined to try to profit from the situation.

During the last decade, mobile communication has crossed the geographic limitations to which mobile networks are confined. Latest mobile communication technologies allow subscribers of a certain home network to use their mobile communication device in a serving network different from their home network. Nowadays, a wireless service provider that utilizes a mobile communication network, which is configured as roaming network, can allow subscribers of another wireless service provider to use its facilities even if the subscriber has no direct pre-existing financial or service agreement with it.

Roaming networks, like any other mobile communication networks, are not immune from mobile phone frauds. In roaming, frauds usually take place when stolen and cloned mobile phones are used to make roaming international calls. Once a suitable subscription has been acquired, it can be used for calling locally or it can be used to place calls in a roaming network. It is estimated that roaming fraud accounts for approximately 10% of the overall losses in the telecommunication market due to fraud. The total annual loss to roaming fraud is estimated at about USD 4 billion worldwide. Fighting fraud is therefore an important part of every operator's revenue assurance initiatives.

While roaming, a subscriber to a certain operator can use the network and services of another operator if the operators have made a roaming agreement. Roaming, especially international roaming, and roaming of international calls in general, is usually expensive and is, therefore, subject to criminal interest and fraud. Roaming fraud is a hard currency problem because the operator of the roaming user has to pay the operator of the roaming network for the use of the network by the roaming user, whether or not the user pays his bills. Therefore, operators have taken measures to limit roaming fraud. One of the main problems behind roaming fraud is the delay in the communication of billing information between the operators. Though the delay has been shortened from 72 to 24 hours (See: Riezenman, Michael; J. Cellular Security: Better, But Foes Still Lurk; IEEE Spectrum, 37 (6), June 2000) or even less, billing information is usually not transferred in real time. The information is typically transferred via electronic data interchange (EDI) or by tape.

Certain methods and systems have been developed for monitoring and reducing the scope of the roaming fraud phenomenon. For example, US Patent Application No. 6,058,301, published on May 2, 2000, describes a method of preventing roaming fraud in cellular telephone systems using different levels of roaming privileges for individual subscribers. When a subscriber roams at a visited network area and initiates a call that exceeds his roaming privileges, an authentication method is used to verify his identity. In such a method, when a wireless unit, such as a mobile phone, initiates a communication within the service area of a visited network, the visited system service provider attempts to find the wireless unit's identification in the visitor location register (VLR) of an appropriate mobile services switching center (MSC) in the visited system (V-MSC). If the VLR lacks the required information, it queries the roaming subscriber's home location register (HLR) in the roaming subscriber's home system via a registration notification request, which includes the wireless unit's identification. Typically, if the service provider of the roaming subscriber is domestic, the VLR sends the query directly to the HLR. If the service provider of the roaming subscriber is a remotely located carrier, the registration notification request is routed through a service control point (SCP) to the related HLR. The HLR examines the identification of the wireless unit of the roaming subscriber in order to determine if it is valid. If so, then the HLR validates the wireless unit with a message to the serving VLR in the visited system, with a setting indicating that the subscriber can be served. However, if the wireless unit is invalid, then the HLR of the home system notifies the serving VLR in the visited system.

Another example for a method for preventing roaming fraud in cellular telephone systems is disclosed in US Patent Application No. 6,285,871, published on September 4, 2001. US Patent Application No. 6,285,871 discloses a method of preventing roaming fraud in a cellular telephone system using different levels of roaming privileges for individual subscribers. When a subscriber initiates a call in a visited network service area that exceeds his roaming privileges, an authentication method is used to verify the identity of the roaming subscriber.

Although each of the aforementioned roaming fraud prevention system can be used to reduce the incidence of roaming fraud, it requires cooperation between the home network and visited network operator. The home operator does not control major steps of the roaming fraud preventing process. Such decentralized control can be problematic for home operators who usually suffer the majority of the damage. For example, when a process for preventing roaming fraud is not performed quickly enough, the home operator usually has to reimburse the expenses of the visited network operator for the fraudulent activity of the roaming subscriber.

Moreover, the aforementioned methods do not relate to intelligent networks. Intelligent networks (INs) are telephone networks which include programmable software not resident on the switch. Such networks allow the service provider to provide special services, such as special call handling, that are not dependent on the capabilities of the switch. Implementing the aforementioned methods in intelligent networks will not prevent roaming fraud which is related to the IN services.

There is thus a widely recognized need for, and it would be highly advantageous to have, a system, an apparatus and a method having an anti-roaming fraud mechanism devoid of the above limitations.

### SUMMARY OF THE INVENTION

According to one aspect of the present invention there is provided an anti-fraud system for controlling fraudulent activity at a roaming cellular telephone network. The system comprises a fraud management unit configured to monitor telephony activity on the roaming network, detect fraudulent patterns within the activity and take action to manage detected fraudulent activity. The system further comprises a roaming signaling interrogation unit which is associated with the fraud management unit and configured to monitor signaling indicative of roaming connections set up by subscribers of the roaming network from other networks and to forward information of the roaming to the fraud management unit, thereby allowing the fraud management unit to manage detected fraudulent activity amongst the roaming connections.

Preferably, the roaming signaling interrogation unit is part of a home service node.

Preferably, the roaming signaling comprises a member of a group consisting of: real time call signaling, set up signaling, and call control signaling.

Preferably, the management is performed by transmitting customized applications for mobile network enhanced logic (CAMEL) triggers to the other networks.

Preferably the anti-fraud system is configured for receiving CAMEL events activated by the CAMEL triggers.

Preferably, the roaming connections comprise members of a group consisting of: establishing a call, sending an Short Message Service (SMS) message, receiving an SMS message, receiving a call, receiving a facsimile transmission, transmitting a facsimile transmission, receiving a video call, establishing a video call, registering a roaming subscriber, and using a telephony service.

More preferably, the roaming signaling interrogation unit uses the home service node to communicate with the other networks via the SS7 network.

More preferably, a mobile phone of one of the subscribers comprises a subscriber identification module (SIM) card with an unstructured supplementary service data (USSD) SIM applet installed.

Preferably, the management is performed by sending a short message service (SMS) using the roaming signaling interrogation unit.
More preferably, the home service node comprises a USSD gateway, wherein the management is performed by sending USSD messages using the home service node.

Preferably, the management is performed by transmitting mobile application part (MAP) commands to the other networks.

Preferably, the fraud management unit comprises a database for storing roaming limitation records, the roaming management instructions being generated according to a match between the subscribers and a record of the roaming limitation records.

Preferably, the management comprises a member of a group consisting of: disconnecting a call, connecting a call, disconnecting a telephony service, connecting a telephony service, and monitoring a call.

Preferably, the fraud management unit comprises a roaming subscriber database for storing roaming limitation records.

More preferably, the fraud management unit is configured to instruct the roaming signaling interrogation unit to communicate with the other networks, thereby controlling the roaming connections, the controlling being performed according to an analysis of the roaming limitation records.

Preferably, the singling comprises customized applications for mobile network enhanced logic (CAMEL) triggers.

According to another aspect of the present invention there is provided a home service node which is configured to be integrated into a home mobile network. The home service node comprises a connection, for receiving signaling messages for roaming events associated with roaming subscribers from a visited mobile network hosting the roaming subscribers. The home service node further comprises a fraud-querying module, associated with the connection, configured for querying a fraud management system regarding the roaming subscribers, thereby receiving related roaming management instructions. The home service node further comprises a managing module, associated with the fraud-querying module, configured for communicating with the visited mobile network, thereby controlling the roaming events, the communication being performed according to the related roaming management instructions.

Preferably, the communication is performed by transmitting customized applications for mobile network enhanced logic (CAMEL) triggers to the visited mobile network.

Preferably, the roaming events comprise members of a group consisting of: establishing a call, sending an Short Message Service (SMS) message, receiving an SMS message, receiving a call, receiving a facsimile transmission, transmitting a facsimile transmission, receiving a video call, establishing a video call, registering a roaming subscriber, and using a telephony service.

Preferably, the connection is connected to the visited mobile network via an SS7 network.

Preferably, a mobile phone of the roaming subscribers comprises a subscriber identification module (SIM) card with an unstructured supplementary service data (USSD) SIM applet installed,

Preferably the home service node further comprises a USSD gateway, wherein the communication is performed by sending USSD messages.

Preferably, the communication is performed by transmitting mobile application part (MAP) commands to the visited mobile network.

Preferably, the fraud management system comprises a database for storing roaming limitation records, the roaming management instructions being generated according to a match between the roaming subscribers and a record of the roaming limitation records.

Preferably, the controlling comprises a member of a group consisting of: disconnecting a call, connecting a call, disconnecting a telephony service, routing a call to a node in the home mobile network, connecting a telephony service, and monitoring a call.

Preferably, the messages are customized applications for mobile network enhanced logic (CAMEL) triggers.

Preferably, the home mobile network is a non-CAMEL network.

According to another aspect of the present invention there is provided a method for configuring a home mobile network to control a roaming event related to a subscriber roaming in a visited mobile network. The method comprises the following steps: a) receiving signaling messages for the roaming event from the visited mobile network, b) forwarding roaming information based on the signaling messages to a fraud management unit, the fraud management unit being configured to generate roaming management instructions according to the roaming information, c) receiving the roaming management instructions from the fraud management unit, and d) communicating with the visited mobile network, thereby controlling the roaming event, the communication being performed according to the related roaming management instructions.

Preferably, the communicating is performed using CAMEL triggers.

Preferably, the communicating comprises using mobile application part (MAP) commands.

Preferably, the communicating comprises sending unstructured supplementary service data (USSD) messages to a SIM applet installed on a mobile phone associated with the roaming subscriber.

Preferably, the method further comprises a step (b1) between steps (b) and (c) of matching the roaming information with a set of roaming definitions, wherein the communicating is performed according to a matched record of the set of roaming definitions.

According to another aspect of the present invention there is provided a fraud management system which is configured to be integrated into a home mobile network. The fraud management system comprises a connection for receiving messages from a home service node, the messages comprise data regarding roaming events associated with roaming subscribers and a fraud-prevention module, associated with the connection, configured for generating roaming management instructions according to the messages. The fraud management system is configured for communicating with the home service node, thereby controlling the roaming events.
According to another aspect of the present invention there is provided a roaming signaling interrogation unit for allowing control of fraudulent activity at a cellular telephone network. The unit comprises a connection to a fraud management unit configured to allow monitoring telephony activity on the network, detect fraudulent patterns within the activity and take action to manage detected fraudulent activity and a communication management unit associated with the connection and configured to monitor signaling indicative of roaming connections set up by subscribers of the cellular telephone network from other networks and to forward information of the roaming, via the connection, to the fraud management unit, thereby allowing the fraud management unit to manage detected fraudulent activity amongst the roaming connections.
Unless otherwise defined, all technical and scientific terms used herein have the same meaning as commonly understood by one of ordinary skill in the art to which this invention belongs. The materials, methods, and examples provided herein are illustrative only and are not intended to be limiting. Implementation of the method, apparatus, and system of the present invention involves performing or completing certain selected tasks or steps manually, automatically, or a combination thereof. Moreover, according to actual instrumentation and equipment of preferred embodiments of the method, apparatus, and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a computer using any suitable operating system. In any case, selected steps of the method, apparatus, and system of the invention could be described as being performed by a data processor, such as a computing platform for executing a plurality of instructions.

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1 is a schematic illustration of a home service node for enabling the implementation of a roaming fraud prevention process, according to a preferred embodiment of the present invention;
Fig. 2 is a schematic illustration of a system for implementing a roaming fraud prevention process, according to a preferred embodiment of the present invention;
Fig. 3 is a schematic illustration of a system for implementing a roaming fraud prevention process in non-CAMEL (customized applications for mobile network enhanced logic) networks, according to a preferred embodiment of the present invention;
Fig. 4 is a simplified sequence chart that depicts a message exchange sequence of a roaming subscriber registration process, according to an embodiment of the present invention;
Fig. 5 is a simplified sequence chart that depicts a message exchange sequence of a roaming subscriber monitoring process, according to an embodiment of the present invention; and
Fig. 6 is a simplified flowchart of an exemplary method for configuring a home public land mobile network (HPLMN) to control events related to roaming subscribers in a visited public land mobile network (VPLMN), according to a preferred embodiment of the present invention.

### DESCRIPTION OF THE PREFERRED EMBODIMENTS

The present embodiments comprise an apparatus, a system and a method for implementing an anti-roaming fraud process.

The principles and operation of an apparatus, a system and a method according to the present invention may be better understood with reference to the drawings and accompanying description.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. In addition, it is to be understood that the phraseology and terminology employed herein is for the purpose of description and should not be regarded as limiting.

The present invention is directed towards an apparatus, a system and a method for enabling a roaming fraud prevention process. According to a preferred embodiment of the present invention, a service node, such as intelligent gateway, is integrated into a mobile network. This configuration has previously been described, although not for preventing roaming fraud, in PCT Publication No. WO 99/57914, published Nov. 11, 1999. When a user subscribing to a home mobile network is roaming in a visited mobile network, the intelligent gateways communicate via international links. This communication is used to manage both mobile originated (MO) calls and mobile terminated (MT) calls in real time. This communication is also used to offer advanced services such as home-language announcements and recharging.

The present embodiments comprise an anti-roaming fraud system, which is configured for controlling fraudulent activity of one or more roaming subscribers at a cellular telephone network. The system may includes or be connected to a fraud management unit that is configured to monitor telephony activity on the cellular telephone network, detect fraudulent patterns within the activity and to take action to manage detected fraudulent activity. The system further comprises a roaming signaling interrogation unit that is associated with the fraud management unit. The roaming signaling interrogation unit is configured to monitor signaling indicative of roaming connections set up by subscribers of the cellular telephone network from other networks and to forward information of the roaming to the fraud management unit. By forwarding the roaming information to the fraud management unit the roaming signaling interrogation unit allows the fraud management unit to manage detected fraudulent activity amongst the roaming connections. The roaming signaling interrogation unit may be part of a home service node that is integrated into a home mobile network and configured to receive signaling messages for roaming events from a visited mobile network that hosts the roaming subscribers, as further described below.

The present embodiments further comprise a home service node that is integrated into a home mobile network. The home service node comprises a connection for receiving signaling messages for roaming events associated with one or more roaming subscribers. The signaling messages are received from a visited mobile network that hosts the roaming subscribers. The home service node further comprises a fraud-querying module, which is electronically associated with the connection. The fraud-querying module is configured for querying a fraud management system regarding any users and by means of the present embodiments extends fraud management to roaming subscribers. Querying results in receiving related roaming management instructions from the fraud management system. The home service node further comprises a managing module, which is electronically associated with the fraud-querying module. The managing module communicates with the visited mobile network. The communication allows the home service node to control the roaming events. The control instructions are adjusted according to the related roaming management instructions, which are received from the fraud management system.

Another embodiment is a method for configuring a home mobile network to control roaming events related to subscribers that roam in visited mobile networks.

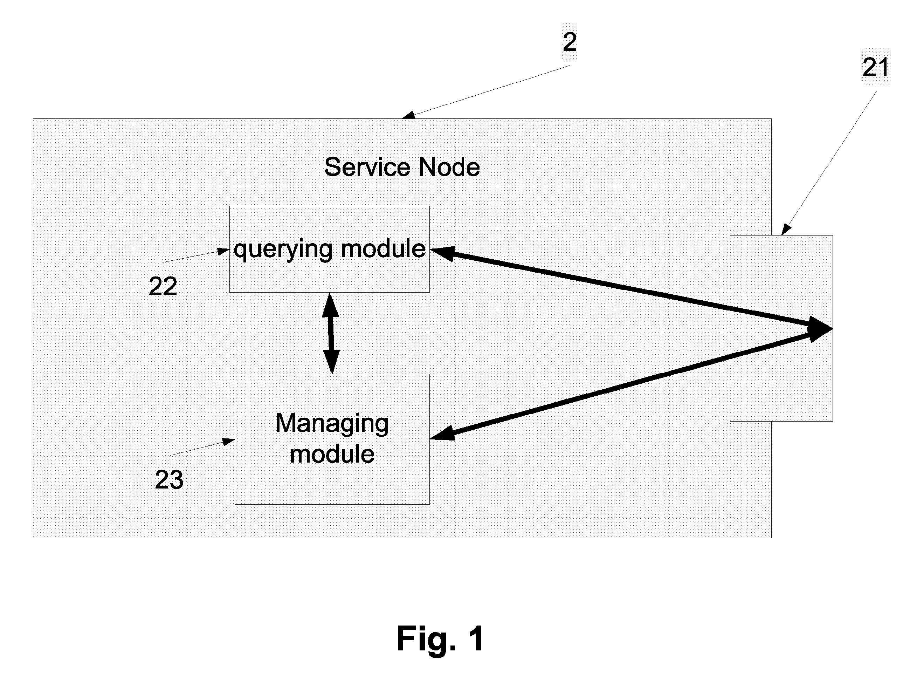

Reference is now made to Fig. 1, which is a schematic illustration of a service node 2 for enabling the implementation of a roaming-fraud prevention process. The service node 2 may be integrated into an HPLMN, which communicates with one or more VPLMNs. The service node 2 comprises a connection 21 for receiving signaling messages of roaming events, which are related to roaming subscribers of the HPLMN. The signaling messages are received from the hosting VPLMNs. Each signaling message preferably comprises an SS7 signal that includes a universal identification of the related roaming subscriber. In addition, the service node 2 comprises a querying module 22, which queries a fraud management system (FMS) regarding roaming subscribers of the related HPLMN. The querying module 22 receives replies from the FMS that comprise management instructions. The management instructions control roaming events of the related roaming subscriber. **Roaming events, roaming connections** or **calls** may be understood as the establishing of a cellular communication, including a call, registration of a roaming subscriber, the sending of an short message service (SMS) message, the receiving of an SMS message, the receiving of a call, the receiving of a facsimile transmission, the transmitting of a facsimile transmission, the receiving of a video call, the establishing of a video call, the registering of a roaming subscriber, the connecting to a telephony service, the using of a telephony service, etc involving a mobile telephony device that is registered at a network other than its home network.

The service node 2 further comprises a managing module 23, which is associated with the querying module 22. The managing module 23 communicates with each one of the VPLMNs that hosts one or more of the roaming subscribers. Such a communication allows the querying module 22 to control the roaming events, as further described below. The service node 2 is preferably connected, via a network of SS7 international links 1, to the VPLMN.

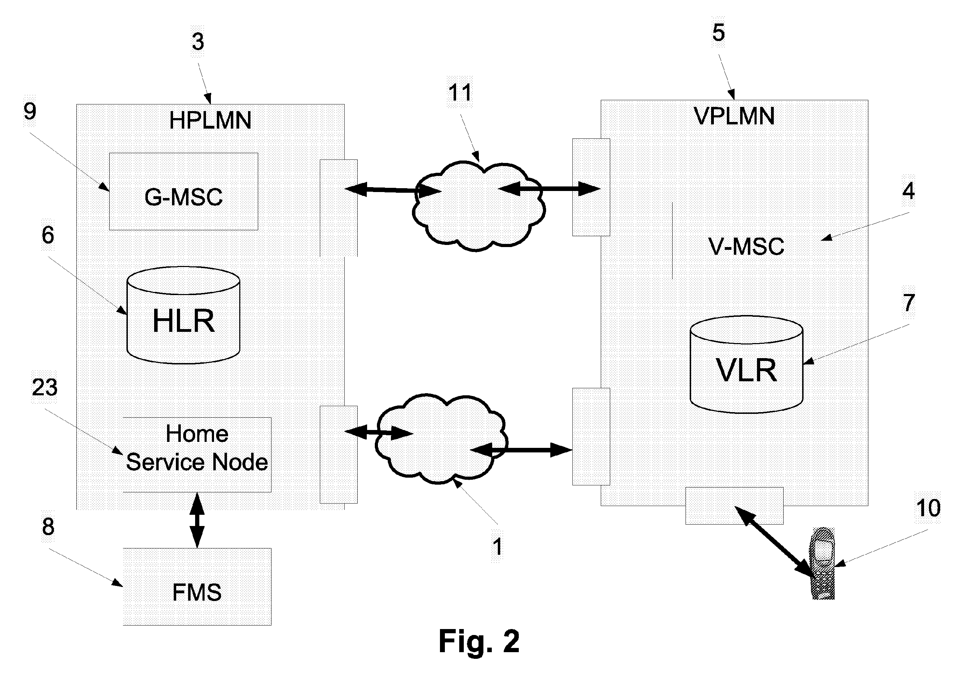

Reference is now made to Fig. 2, which is a schematic illustration of a system for implementing a roaming fraud prevention process, according to a preferred embodiment of the present invention. The home service node 2 is preferably a service node as in Fig. 1. The home service node 2 is preferably integrated into an HPLMN 3. The network of SS7 international links 1 connects the HPLMN 3 to a VPLMN 5. This connection allows communicating with one or more visited mobile switching centers (V-MSCs) 4, which are integrated into the VPLMN 5. Fig. 2 depicts a V-MSC 4 that hosts a roaming subscriber 10 of the HPLMN 3. It should be noted that the home service node 2 can be connected to the HPLMN 3 from afar and therefore its location is not confined to the location of the HPLMN components.

The HPLMN 3 comprises a central database, such as an HLR 6, that contains details of each mobile phone subscriber who is authorized to use the services of the HPLMN 3. For each phone subscriber, the central database further contains details of a related gateway MSC (G-MSC) 9, which interacts with the HLR 6 to obtain routing information. The VPLMN 5 comprises one or more central databases, such as VLR 7. The VLR 7 preferably stores information about all the mobile phones that are connected to the MSC to which it is attached. Fig. 2 depicts a VLR 7, which stores information about all the mobile phones that are currently under the jurisdiction of the V-MSC 4.

Voice is typically sent over E1/T1 trunks. An international carrier network 11 connects HPLMN 3 and VPLMN 5, enabling a voice path connection between the networks. Signaling messages, which are related to mobility management, are preferably transferred by a mobile application part (MAP) communication that is preferably carried over the network of SS7 international links 1. One of the layers under MAP is the signaling connection control part (SCCP).

The home service node 2 is connected to an FMS 8, which is used to take an active part in preventing fraudulent calls that result in substantial losses to the operator of the HPLMN 3. The FMS 8 is configured to instruct the home service node 2 to perform real time actions, such as disconnecting fraudulent calls or barring fraudulent roaming subscribers from placing future calls, as further described below. The FMS 8 may be implemented as a standalone server, which is connected to the home service node 2 via, preferably, a computer network, as depicted in Fig. 2, or as a module which is integrated into the home service node 2.

Preferably, the HPLMN 3 implements a GSM (global system for mobilized communication) CAMEL infrastructure. The main purpose of the GSM CAMEL infrastructure is to enable networks to offer features of home-oriented services such as roaming prepaid or VPN. The GSM CAMEL infrastructure enables the HPLMN 3 to control MO telephony calls placed by its subscribers, while roaming in the VPLMN 5. The CAMEL settings and triggers are configured for all roaming subscribers, or just for prepaid roaming subscribers, depending on the required services.

Preferably, the VPLMN 5 implements a GSM CAMEL infrastructure. In such an embodiment, as further described below, the home service node 2 generates CAMEL triggers on an individual basis, according to the requirements of the FMS 8. Moreover, the home service node 2 controls MO calls from roaming subscribers 10, according to CAMEL events which are received from the VPLMN 5. These calls are continued to their final destination, based on related originally dialed numbers (DNs). From reasons listed below, a call may be routed to the home network. In such routing a new number will be allocated to each one of the calls, replacing their original DN. The home service node 2 manages a range of direct in dialing numbers (DIDs), which are allocated to the MO calls, and replaces the original DNs as intermediate call destinations.

Preferably, the home service node 2 comprises a roaming detection unit, based on a signaling probe monitoring the SS7 MAP international links. Each of US Patent Publication No. 2005/0186939, assigned to Starhome GmbH, and US Patent Publication No. 2003/072425, assigned to Agilent Technologies, Inc., herein incorporated in their entirety by reference, discloses such a probe. The probe works together with a database and an associated data aggregation application, which arranges signaling data per roaming telephone, in order to produce a record that indicates how a particular telephone is used when roaming. As well as signaling, call data records (CDRs), may be available. Call data records are records of individual telephone calls or connections. The application includes a database, logic to add records to the database, and additional logic to utilize the data from the database, as explained in the aforementioned U.S. Patent Publication No. 2005/0186939.
Using the probe allows the home service node 2 to automatically detect a registration event of any roaming subscriber belonging to the HPLMN 3. By monitoring registration messages such as MAP UpdateLocation messages and Insert_Subscriber_Data (ISD) MAP messages, the home service node 2 collects the information necessary for the application such as the correlation of the international mobile subscriber identity (IMSI) with the mobile station integrated services digital number (MSISDN). In general, the ISD_MAP command instructs the related VLR to download a subscriber profile from the HLR and to forward it to the currently serving VLR. For setting a CAMEL trigger at the currently serving VLR, the ISD_MAP command should include an online subscriber controlled input (O-SCI) field, defining the related SCP address, along with other relevant details.

Whenever such a registration event is detected, the home service node 2 issues a notification to the FMS 8. The FMS 8 determines, as further described below, if the roaming subscriber 10 is a candidate for a call tracking action, a call blocking action, a call monitoring action, etc. Accordingly, the FMS 8 sends an indication back to the home service node 2, which in turn sets a CAMEL trigger for the roaming subscriber 10 in the VLR 7. Preferably, the SCP home address of the trigger is defined to be the address of the home service node 2.

In use, whenever the roaming subscriber 10 places an MO call, a CAMEL event is sent from the V-MSC 4 at the VPLMN 5 to the home service node 2, which functions, *inter alia,* as an SCP. Preferably, the home service node 2 allocates a specific DID number for that call, and instructs the V-MSC 4 to forward the call to the allocated DID number. The home service node 2 records the call's original DN for that DID, preferably along with a related calling line identification (CLI). When the voice call reaching the platform, the FMS 8 operates as described above, and the call is continued to the original destination, with the original CLI embedded therein.

The requesting units may be switches known as service switching points (SSPs) or local MSCs. Usually, when a telephone caller dials a number, a related SSP responds by sending a query to an SCP in a manner such that the call can be handled. The SSP uses SS7 protocols, which are responsible for setting up calls with other SSPs, managing the calls, and terminating them. The local MSC or the related SSP, for example, uses the responses to complete a call or to provide an appropriate telephony service. In order to allow proper communication, home service node 2 is preferably configured as the primary SCP for the call. Such a configuration is needed as the address defined in the VLR's CAMEL triggers is the address of the primary SCP. Then, in order to allow the proper communication, the home service node 2 acts as the SSP for communicating with the original SCP.

In such a manner the home service node 2 is designed to receive and analyze CAMEL events, without impeding their reception by the original SCP. The home service node 2 is preferably configured to issue CAMEL events as an SSP. Preferably, the home service node 2 is configured to act as a signaling point in the SS7 network.

In one embodiment of the present invention, the home service node 2 stores each one of the received CAMEL events, along with a related original home SCP address and other original O-SCI details. After performing the roaming fraud prevention process using the FMS 8, as described below, the home service node 2 issues the stored CAMEL event on behalf of the subscriber, based upon the original O-SCI definitions. The home service node 2 manages the responses from the original home SCP and communicates it to the roaming network, if necessary.

In one embodiment of the present invention, before sending the ISD_MAP command, the home service node 2 restores the roaming subscriber profile from the HLR 6 by issuing a RESTORE_DATA_MAP command, or by using other MAP messages. Based on this information, the home service node 2 generates an ISD_MAP command that includes an O-SCI trigger, and sends it to the currently serving VLR 7. Preferably, the address of the currently serving VLR 7 has been detected by the home service node 2 using the aforementioned SS7 probe system, which monitors the MAP update location (UL) messages that are sent whenever the roaming subscriber registers to a new VLR.

The home service node 2 is configured to receive instructions from the FMS 8 to either bar the roaming subscriber from placing calls, or to control the roaming subscriber's calls in real time. For example, the home service node 2 can disconnect, connect, or continue a call according to the instructions of the FMS 8. Preferably, the home service node 2 is configured to bar fraudulent roaming subscribers from placing calls by sending ISD_MAP commands. Such ISD commands are sent, *inter alia,* upon receipt of UL messages from the VPLMN 5.

As described above, in order to prevent fraudulent roaming calls, the home service node 2 controls the calls. Such a control has to be implemented in accordance with the architecture of the VPLMN 5. If the switches of the VPLMN 5 have CAMEL extensions installed, the home service node 2 can control MO calls using CAMEL events. The CAMEL events are configured by the home service node 2 using an ISD_MAP command. In general, as described below, the ISD command downloads a subscriber profile from the HLR. Moreover, in order to set a CAMEL trigger at the roaming VLR, the ISD message includes an O-CSI field, defining the home SCP address, along with other relevant details. It should be noted that even if the home network does not support CAMEL, such a system will work, as the home service node 2 is configured to communicate with visited networks that support CAMEL.

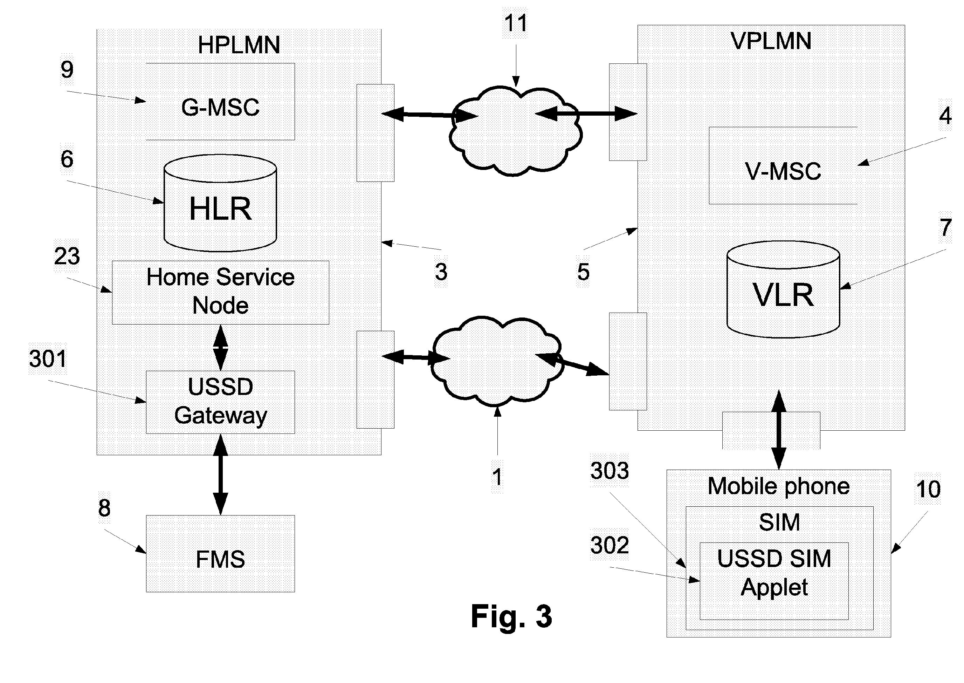

Reference is now made to Fig. 3, which is another schematic illustration of a system for implementing a roaming fraud prevention process, according to an embodiment of the present invention. The VPLMN 5, the HPLMN 3 and the FMS 8 are substantially as in Fig. 2. In the embodiment depicted in Fig. 3, however, the home service node 2 comprises an unstructured supplementary service data (USSD) gateway 301 and the mobile phone 10 has an integrated SIM card 303 which is installed with a USSD SIM applet 302.

Fig. 2, discussed above, depicts a system that is configured for preventing roaming frauds which is performed using the infrastructure of a VPLMN 5 that utilizes switches with CAMEL extensions. However, not all the VPLMNs utilize such switches. Fig. 3 depicts a system that allows the implementation of a roaming fraud prevention process in non-CAMEL VPLMNs. The USSD gateway 301 is configured to communicate with a USSD SIM applet 302 that is installed on the SIM card of the mobile phone 10 of the HPLMN's subscriber that roams to the non-CAMEL VPLMN 5. It should be noted that as fraudulent SIM cards have a very short life span, the USSD SIM applet 302 is preferably installed on the SIM card 303 before it is provided to the user. The SIM applet 302 may be any handset application, which can be implemented as a binary runtime environment for wireless (Brew) application, a JAVA 2 micro edition (J2ME) application, a Symbian^{™} application, a Microsoft Mobile^{™} application, a UNIX application, etc.
The USSD applet 302 is configured to provide the USSD gateway with call events that comprise user information such as IMSIs, call start actions, and original DNs. The USSD gateway 301 is configured to forward the call events to the FMS 8, preferably in real time. Preferably, the USSD SIM applet 302 is activated or installed only when a related roaming subscriber has been defined as a suspicious subscriber. The home service node 2 can receive instructions from the FMS 8 either to bar the roaming subscriber from placing calls or to disconnect the roaming subscriber's MO calls by using MAP commands, such as MAP_CANCEL commands. It should be noted that using the USSD gateway 301 and the USSD SIM applet 302 is only an exemplary manner for instructing roaming subscribers in non-CAMEL VPLMNs. The roaming subscribers may be managed by sending other messages such as short message service (SMS).

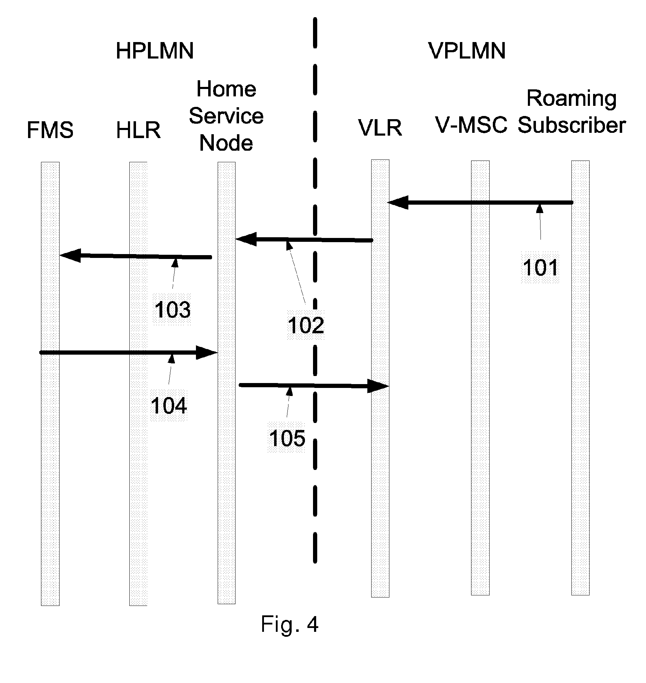

Reference is now made to Fig. 4, which is a sequence chart that depicts a message exchange sequence of a roaming subscriber registration process, according to one embodiment of the present invention. In order to allow the FMS to determine whether roaming subscribers should be blocked, monitored, or allowed, the FMS receives information about the registration of each roaming subscriber with the VPLMN. Accordingly, the FMS determines whether to monitor, block, or allow the roaming events. Preferably, the FMS bases its determination on a set of predefined definitions or policies. In one embodiment of the present invention, the FMS comprises a subscriber database in which the subscribers are divided into several groups of users. Preferably, each group is represented by a list of MSISDNs of different subscribers. In one embodiment of the present invention, users are divided into a "Black List" that comprises roaming subscribers that are designated to constantly be monitored at all destinations, a "White List" that comprises roaming subscribers that are not to be monitored, and a "Gray List" that comprises roaming subscribers that are to be monitored on a selective basis. In an embodiment, only prepaid roaming subscribers are placed on the blacklist, as these are likely candidates for fraudulent behavior.

Fig. 4 depicts a sequence of different messages which are sent during the registration process. The messages are sent between units of a CAMEL based VPLMN that hosts a certain roaming subscriber and an HPLMN to which the roaming subscriber is subscribed. In one embodiment of the present invention, the process is initiated when the roaming subscriber is registered on the VLR of the VPLMN, as shown at 101. Upon registration, the VLR sends a UL message toward the HLR of the HPLMN. The HPLMN is preferably determined according to the call's original DN. As shown at 102, the UL message is intercepted by the home service node at the HPLMN. The UL message is sent over an IP connection of a transmission control protocol (TCP)/IP network. As shown at 103, the home service node triggers the FMS by forwarding UL information about the roaming subscriber, such as IMSI, country, etc. The UL information may be in the form of frames, packets, or any other unit of data which is sent across a network. Based upon the UL information, the FMS issues a request for monitoring, blocking, routing or allowing calls from the roaming subscriber that is documented in the UL information, and forwards the request, as a response 104, to the home service node. Preferably, such a request is sent only if the characters of the roaming subscriber match the predefined definitions for suspect roaming subscribers. As shown at 105, the home service node generates a CAMEL event, such as an ISD_MAP command, that includes an O-SCI trigger, and sends it to the currently serving VLR of the hosting VPLMN. The SCP home address for the event is defined to be the home service node. From here on, whenever the roaming subscriber places an MO call, a CAMEL event is sent from the serving MSC of the VPLMN to the home service node.

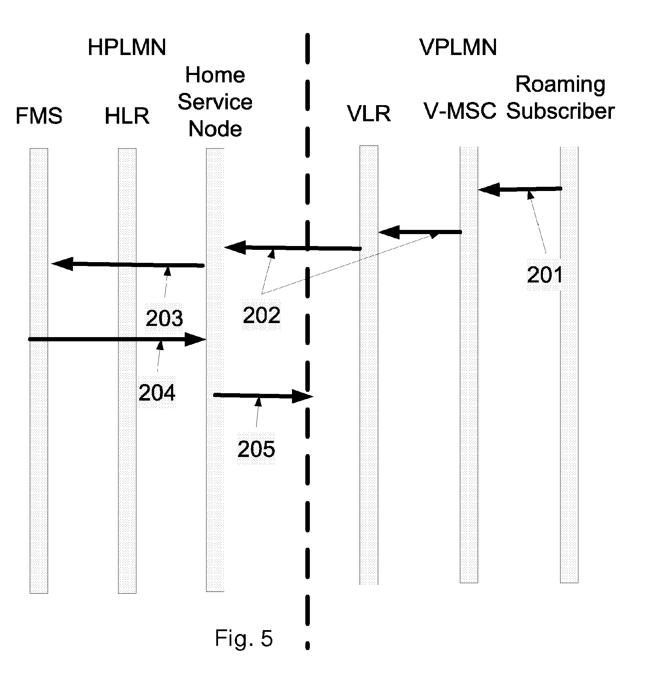

Reference is now made to Fig. 5, which is a sequence chart that depicts a message exchange sequence of a roaming subscriber monitoring process, according to one embodiment of the present invention. As described above, after a roaming subscriber has been registered and reported to the FMS, it is decided whether to monitor, block or merely accept calls from him. If the roaming subscriber has been classified as suspect, as described above, each call that is made by the roaming subscriber generates a notification, such as a CAMEL event. The notification is sent to the home service node. Such a notification allows the HPLMN to monitor, block, or allow the roaming subscriber's calls.

As shown at 201, a request to establish a call between the roaming subscriber and a third party initiates the process. Such a request is forwarded to the V-MSC of the VPLMN to which the roaming subscriber is connected. Then, as shown at 202, a notification is sent to the home service node, preferably via the related VLR. If the switches of the VPLMN have CAMEL extensions installed, a CAMEL IDP (initial detection point) event is sent to the home service node, preferably, via the home G-MSC. The CAMEL IDP event contains the address of the V-MSC that hosts the roaming subscriber. As shown at 203, the home service node forwards information about the roaming subscriber's call and location to the FMS. In the following step, 204, the FMS instructs the home service node to monitor, block, or allow the call according to an internal analysis which is based on received information, as further described below. For example, if the FMS detects fraud, it informs the home service node, which in turn disconnects the call or activates a monitoring function, thus preventing or monitoring the call. In addition, it is possible to bar the roaming subscriber from making any further calls while roaming in the same manner.

In one embodiment of the present invention, the FMS is configured to instruct the home service node to intercept the roaming subscriber's call. In such an embodiment, the home service node allocates a DID number, and instructs the VPLMN to route the call to that number, as shown at 205. The home service node preferably stores the original DN and the CLI of the directed call. Preferably, the DID number is forwarded to the VPLMN via the home G-MSC, as a response to a CAMEL IDP event, allowing the VPLMN to route the call to the DID number of the home service node. The home service node routes the call to the final destination, after performing monitoring operations, as defined by the FMS.

In another embodiment of the present invention, all the roaming subscribers are monitored using the home service node. In such an embodiment, the FMS does not verify that a certain roaming subscriber is to be monitored. The HLR may be configured to indicate that the home service node is essentially the SCP for all outbound roaming subscribers, thereby granting the home service node control over all the roaming subscribers' MO calls.

Reference is now made, once again, to Fig. 2. In another embodiment of the present invention, the FMS 8 is configured to instruct the home service node 2 to create a query regarding the location of a specific roaming subscriber. The home service node 2 queries the HLR 6 of the HPLMN 3 for the location of the roaming subscriber, using any time interrogation (ATI) MAP message. The home service node 2 is configured to send a reply message to the FMS 8 that contains the roaming subscriber's current location.

In one embodiment of the present invention, as described above, the home service node 2 comprises a roaming detection unit such as a probe that is used for detecting the registration of roaming subscribers. Such a roaming detection unit can also be used to gain valuable information about the roaming subscribers in the VPLMNs by monitoring the international mobile application part (MAP) links. The MAP links provide services to mobile phones of roaming subscribers. The probe may by used to intercept the following messages: MAP_UL, ISD_MAP, MAP_CANCEL, MAP_PURGE, MAP_SEND_AUTHENTICATION_INFO, MAP_SAI, etc. Such messages comprise information such as IMSI, VPLMN, GSM triplets, GSM quintuplets, etc. The intercepted messages are preferably forwarded to the FMS that stores them in predefined records. The information, which is gathered from intercepting the aforementioned messages, may be used to evaluate whether a certain roaming subscriber is involved in fraudulent activity. For example, it is assumed that a fraudulent roaming subscriber makes a significantly high number of MO calls. As commonly known, MAP_SEND _AUTHENTICATION_INFO messages are required, according to the standards, at least once in a predefined number of mobile originated and terminated call set-ups for a certain party. Thus, by monitoring those messages and providing this real time information to the FMS of the operator, the FMS may determine a possible fraud situation. Preferably, the FMS is configured to initiate the blocking or monitoring of a fraudulent roaming subscriber, based on data analysis of records stored in the database.

As described above, the home service node 2 is preferably configured to control roaming calls, preferably using the aforementioned FMS database. Preferably, the home service node 2 has the option to disconnect or block calls according to a set of special conditions. The criteria for disconnecting calls are defined for different roaming profiles. For example, the criteria may include original DNs of the calls, aggregated duration of calls, frequency of calls, or a combination thereof. The home service node 2 is preferably configured to delimit the actions of different roaming subscribers. The delimitation may be configured according to the following limitations: restriction of the allowed call destinations of a certain roaming subscriber, allowance of only HPLMN bound calls, blockage of calls from certain countries, restriction of the number of calls per predefined period, and restriction to a predefined amount of airtime. The aforementioned limitations may be defined according to a certain IMSI, a visited country, a destination, a region, or a combination thereof.

As described above, the FMS 8 or the home service node 2 comprises a subscriber database in which the subscribers are divided into several groups. Preferably, the home service node 2 has the option to monitor, disconnect or block calls according to the group to which the related roaming subscriber belongs. For example, in one embodiment of the present invention, roaming subscribers are divided into a "White List," a "Black List" and a "Gray List." Calls or transactions performed by roaming subscribers who are identified in the "White List" are not monitored. Calls or transactions performed by roaming subscribers who are identified in the "Black List" are blocked. All other calls are monitored.

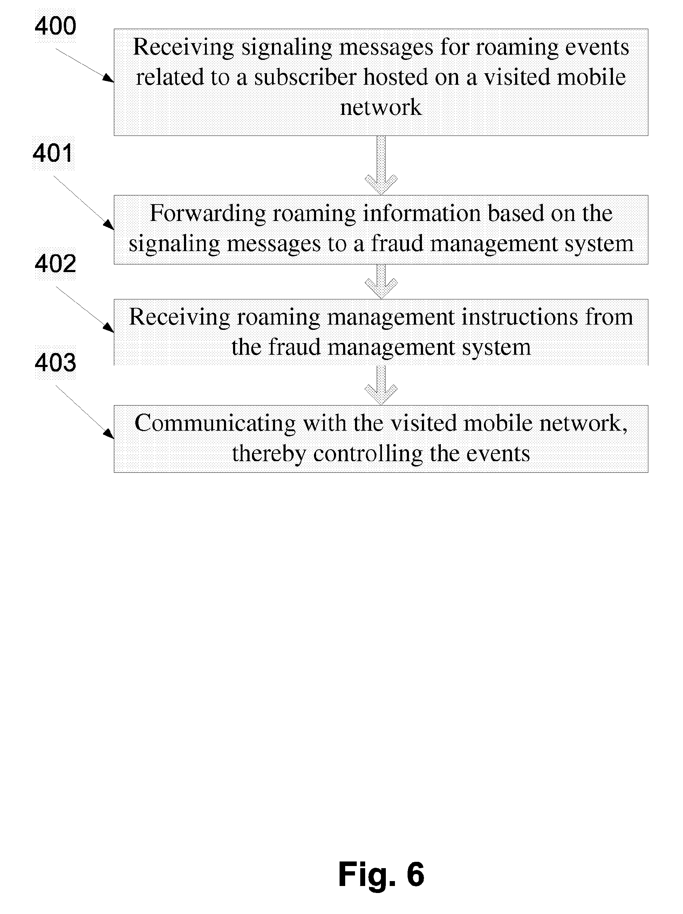

Reference is now made to Fig. 6, which is a flowchart of an exemplary method for configuring an HPLMN to control events related to roaming subscribers in a VPLMN, according to a preferred embodiment of the present invention.

During the first step, as shown at 400, one or more signaling messages, for a roaming event that is related to a certain roaming subscriber, are received by the home service node, from the VPLMN that hosts the roaming subscriber. In the following step, as shown at 401, roaming information, which is based on the received signaling messages, is forwarded by the home service node to a fraud management system. As described above, the fraud management unit generates roaming management instructions according to the roaming information. Then, as shown at 402, roaming management instructions are received from the fraud management system. Based upon the received roaming management instructions, in step 403, the home service node communicates with the VPLMN that hosts the related roaming subscriber, thereby affecting the event that is related to the received signaling message. Preferably, the home service node has the option to disconnect, connect or block calls according to the roaming management instructions. Communication is performed according to the received roaming management information.

It is expected that during the life of this patent many relevant devices, methods, and systems will be developed and the scope of the terms herein, particularly of the terms home service nodes, communication, probes, networks, databases, and records are intended to include all such new technologies *a priori.*

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims. All publications, patents, and patent applications mentioned in this specification are herein incorporated in their entirety by reference into the specification, to the same extent as if each individual publication, patent or patent application was specifically and individually indicated to be. incorporated herein by reference. In addition, citation or identification of any reference in this application shall not be construed as an admission that such reference is available as prior art to the present invention.

## Claims

1. An anti-fraud system for controlling fraudulent activity at a roaming cellular telephone network; the system comprising:
a fraud management unit configured to monitor telephony activity on said roaming network, detect fraudulent patterns within said activity and take action to manage detected fraudulent activity; and
a roaming signaling interrogation unit associated with said fraud management unit and configured to monitor signaling indicative of roaming connections set up by subscribers of said roaming network from other networks and to forward information of said roaming to said fraud management unit, thereby allowing said fraud management unit to manage detected fraudulent activity amongst said roaming connections.

2. The anti-fraud system of claim 1, wherein said roaming signaling interrogation unit is part of a home service node.

3. The anti-fraud system of claim 1, wherein said roaming signaling comprises a member of a group consisting of: real time call signaling, set up signaling, and call control signaling.

4. The anti-fraud system of claim 1, wherein said management is performed by transmitting customized applications for mobile network enhanced logic (CAMEL) triggers to said other networks.

5. The anti-fraud system of claim 1, configured for receiving CAMEL events activated by said CAMEL triggers.

6. The anti-fraud system of claim 1, wherein said roaming connections comprise at least one member of a group consisting of: establishing a call, sending an Short Message Service (SMS) message, receiving an SMS message, receiving a call, receiving a facsimile transmission, transmitting a facsimile transmission, receiving a video call, establishing a video call, registering a roaming subscriber, and using a telephony service.

7. The anti-fraud system of claim 2, wherein said roaming signaling interrogation unit uses said home service node to communicate with said other networks via the SS7 network.

8. The anti-fraud system of claim 2, wherein a mobile phone of one of said subscribers comprises a subscriber identification module (SIM) card with an unstructured supplementary service data (USSD) SIM applet installed.

9. The anti-fraud system of claim 1, wherein said management is performed by sending a short message service (SMS) using said roaming signaling interrogation unit.

10. The anti-fraud system of claim 8, wherein said home service node comprises a USSD gateway, wherein said management is performed by sending USSD messages using said home service node.

11. The anti-fraud system of claim 1, wherein said management is performed by transmitting mobile application part (MAP) commands to said other networks.

12. The anti-fraud system of claim 1, wherein said fraud management unit comprises a database for storing roaming limitation records, said roaming management instructions being generated according to a match between said subscribers and a record of said roaming limitation records.

13. The anti-fraud system of claim 1, wherein said management comprises a member of a group consisting of: disconnecting a call, connecting a call, disconnecting a telephony service, connecting a telephony service, and monitoring a call.

14. The anti-fraud system of claim 1, wherein said fraud management unit comprises a roaming subscriber database for storing roaming limitation records.

15. The anti-fraud system of claim 14, wherein said fraud management unit is configured to instruct said roaming signaling interrogation unit to communicate with said other networks, thereby controlling said roaming connections, said controlling being performed according to an analysis of said roaming limitation records.

16. The anti-fraud system of claim 1, wherein said singling comprises customized applications for mobile network enhanced logic (CAMEL) triggers.

17. A home service node configured to be integrated into a home mobile network, said home service node comprising:
a connection for receiving signaling messages for roaming events associated with at least one roaming subscriber from a visited mobile network hosting said at least one roaming subscriber;
a fraud-querying module, associated with said connection, configured for querying a fraud management system regarding said at least one roaming subscriber, thereby receiving related roaming management instructions; and
a managing module, associated with said fraud-querying module, configured for communicating with said visited mobile network, thereby controlling said roaming events, said communication being performed according to said related roaming management instructions.

18. The home service node of claim 17, wherein said communication is performed by transmitting customized applications for mobile network enhanced logic (CAMEL) triggers to said visited mobile network.

19. The home service node of claim 17, wherein said roaming events comprise at least one member of a group consisting of: establishing a call, sending an Short Message Service (SMS) message, receiving an SMS message, receiving a call, receiving a facsimile transmission, transmitting a facsimile transmission, receiving a video call, establishing a video call, registering a roaming subscriber, and using a telephony service.

20. The home service node of claim 17, wherein said connection is connected to said visited mobile network via an SS7 network.

21. The home service node of claim 17, wherein a mobile phone of said at least one roaming subscriber comprises a subscriber identification module (SIM) card with an unstructured supplementary service data (USSD) SIM applet installed.

22. The home service node of claim 17, further comprising a USSD gateway, wherein said communication is performed by sending USSD messages.

23. The home service node of claim 17, wherein said communication is performed by transmitting mobile application part (MAP) commands to said visited mobile network.

24. The home service node of claim 17, wherein said fraud management system comprises a database for storing roaming limitation records, said roaming management instructions being generated according to a match between said at least one roaming subscriber and a record of said roaming limitation records.

25. The home service node of claim 17, wherein said controlling comprises a member of a group consisting of: disconnecting a call, connecting a call, disconnecting a telephony service, routing a call to a node in said home mobile network, connecting a telephony service, and monitoring a call.

26. The home service node of claim 17, wherein said messages are customized applications for mobile network enhanced logic (CAMEL) triggers.

27. The home service node of claim 17, wherein said home mobile network is a non-CAMEL network.

28. A method for configuring a home mobile network to control a roaming event related to a subscriber roaming in a visited mobile network, the method comprising the steps of:
a) receiving signaling messages for said roaming event from said visited mobile network;
b) forwarding roaming information based on said signaling messages to a fraud management unit, said fraud management unit being configured to generate roaming management instructions according to said roaming information;
c) receiving said roaming management instructions from said fraud management unit; and
d) communicating with said visited mobile network, thereby controlling said roaming event, said communication being performed according to said related roaming management instructions.

29. The method of claim 28, wherein said communicating is performed using CAMEL triggers.

30. The method of claim 28, wherein said communicating comprises using mobile application part (MAP) commands.

31. The method of claim 28, wherein said communicating comprises sending unstructured supplementary service data (USSD) messages to a SIM applet installed on a mobile phone associated with said roaming subscriber.

32. The method of claim 28, further comprising a step (bl) between steps (b) and (c) of matching said roaming information with a set of roaming definitions, wherein said communicating is performed according to a matched record of said set of roaming definitions.

33. A fraud management system configured to be integrated into a home mobile network, said fraud management system comprising:
a connection for receiving at least one message from a home service node, said at least one message comprising data regarding roaming events associated with at least one roaming subscriber; and
a fraud-prevention module, associated with said connection, configured for generating roaming management instructions according to said at least one message;
wherein said fraud management system is configured for communicating with said home service node, thereby controlling said roaming events.

34. A roaming signaling interrogation unit for allowing control of fraudulent activity at a cellular telephone network; the unit comprising:
a connection to a fraud management unit configured to allow monitoring telephony activity on said network, detect fraudulent patterns within said activity and take action to manage detected fraudulent activity; and
a communication management unit associated with said connection and configured to monitor signaling indicative of roaming connections set up by subscribers of said cellular telephone network from other networks and to forward information of said roaming, via said connection, to said fraud management unit, thereby allowing said fraud management unit to manage detected fraudulent activity amongst said roaming connections.
